Europäisches Patentamt

European Patent Office

Office européen des brevets

(11) Publication number : **0 547 763 A1**

(12) # EUROPEAN PATENT APPLICATION

(21) Application number : 92310373.3

(22) Date of filing : 13.11.92

(51) Int. Cl.⁵ : **C08K 13/02, // A61L9/18 ,
(C08K13/02, 5:12, 5:11, 5:09,
5:15, 3:34)**

(30) Priority : 17.12.91 KR 2317791

(43) Date of publication of application :
23.06.93 Bulletin 93/25

(84) Designated Contracting States :
AT BE CH DE DK ES FR GB GR IE IT LI LU MC
NL PT SE

(71) Applicant : HAITAI CONFECTIONERY CO.,
LTD.
86, 5-ga, Yangpyung-dong
Youngdungpo-gu, Seoul (KR)

(72) Inventor : Jung, Jong Suk
1-101, Taenong Garden, 580-16, Myeonmok
7-dong
Choongrang-ku, Seoul (KR)
Inventor : Lim, Jae Fun
2-905, Siyoung Apt., Sungsan-dong
Mapo-ku, Seoul (KR)

(74) Representative : Brock, Peter William
URQUHART-DYKES & LORD 91 Wimpole
Street
London W1M 8AH (GB)

(54) **An antibacterial polyvinylchloride plastisol composition.**

(57)    The present invention relates to a polyvinylchloride plastisol composition having an excellent antibacterial activity, in whcih ceramic as a far infrared ray radiating material is mixed with a polyvinylchloride plastisol composition comprising polyvinylchloride paste resin, diisononyl-phthalate, adipic acid glycolpolyester, calcium stearate, zinc stearate, epoxy soybean oil and additives.

EP 0 547 763 A1

The invention relates to an antibacterial polyvinylchloride plastisol composition. More particularly, the invention relates to a polyvinylchloride plastisol composition having an excellent antibacterial activity, which is comprised of a mixture of a polyvinylchloride plastisol with ceramic as a far infrared ray radiating material.

Hitherto, polyvinylchloride plastisol has been used for making toys, dolls, industrial art objects, beach balls, electric insulators and general merchandise. polyvinylchloride plastisol used for making these products is composed of a mixture of polyvinylchloride paste resin, a plasticizer, a stabilizer and additives. The blending ratio between the components of the composition and an election of additives depend on the usage of the products.

For example, in case of a polyvinylchloride plastisol used for making toys, its blending ratio and additives depend on either a hard toy or a soft toy. In case of the soft toy, polyvinylchloride plastisol comprises polyvinylchloride paste resin, stabilizer, plasticizer and the like. On the other hand, polyvinylchloride plastisol(it is called as "an organosol" according to the addition of a diluent) in case of the hard toy has a composition, to which a small amount of diluent is added to decrease the viscosity because of a small blending amount of the plasticizer.

In particular, the composition used for infant's toys ahould be made from harmless materials. Although there is no harmfulness in the composition itself, the products will become harmful in the course of use. Infant's toys are stained with the saliva, milk or residue of food because infants sucks the things in hands, on their habits. When left these toys in the room, they are usually contaminated with various bacteria in air as well as microorganisms moving from another person's touch. Infants are infected with pathogenic bacteria propagated on the surface of the toys due to the habit of biting and sucking the toys. The infants are liable to illness because of their weak immunity. The adults may sometimes treat these facts lightly on account of their ignorance.

The present inventors have extensively studied on the antibacterial polyvinylchloride plastisol composition which can remarkably inhibit the growth of pathogenic bacteria. As a result, it has been found that a polyvinylchloride plastisol composition comprising polyvinylchloride paste resin as a resin, diisononyl phthalate as the first plasticizer, polyoxyethylene nonylphenyl ether having an emulsifier consisting of four oxyethylenes as an additive, adipic acid glycolpolyester as the second plasticizer, epoxy soybean oil, calcium stearate and zinc stearate as a stabilizer and if necessary, a diluent, and ceramic as a far infrared ray radiating material shows an excellent antibacterial activity.

It is an object of the invention to provide a polyvinylchloride plastisol composition having an excellent antibacterial activity.

Another object of the invention is to provide an antibacterial polyvinylchloride plastisol composition which can remarkably inhibit the growth of pathogenic bacteria.

According to the present invention, there is now provided a polyvinylchloride plastisol composition in a blended form, which is comprised of 100 parts by weight of polyvinylchloride paste resin, 30 to 75 parts by weight of diisononylphthalate(60 to 75 parts by weight for a soft toy and 30 to 40 parts by weight for a hard toy), 0.13 to 0.2 parts by weight of poly(oxyethylene)$_4$ nonylphenyl ether, 1 to 2.1 parts by weight of epoxy soybean oil, 0.3 to 0.4 parts by weight of calcium stearate, 0.3 to 0.4 parts by weight of zinc stearate, 11.5 to 12.2 parts by weight of adipic acid glycol polyester, and if necessary, a small amount of a diluent, and more than 20 % by weight, preferably 20 to 30 % by weight of ceramic based on the total amount of the composition.

## BRIEF DESCRIPTION OF THE DRAWINGS

Fig. 1    is a graph shown the rate of a far infrared ray radiation when the compositon of the present invention containing 10 % wt. of ceramic is measured by an infrared spectrophotometer in the range of wavelength of 5 ~ 20 μm.

Fig. 2    is a graph shown the rate of a far infrared ray radiation when the compositon of the present invention containing 20 % wt. of ceramic is measured by an infrared spectrophotometer in the range of wavelength of 5 ~ 20 μm.

Polyvinylchloride paste resin is preferable to have the mean polymerizing degree of 1,700 with a low viscosity, small change with time and low water absorption property.

The first plasticizer is preferable to be a diisononyl phthalate having an average molecular weight of 418.6 to give easy molding and processing by lowering the melting point and the viscosity of polymer, to impart the softness in the range of the using temperature by lowering the softening temperature and also to impart the characteristics such as elasticity, adhesive property and the like to the polymer.

The stabilizer, in order to prevent the dehydrochloride reaction, is immediately reacted with hydrochloride formed when a vinylchloride resin is processed, resulting in interuption of the chain reaction of double bond. As well, the stabilizers may be used in combination of calcium stearate, zinc stearate and epoxy soybean oil as the metallic salts of higher fatty acid to greatly improve a prolonged heat resistance.

As other additives, emulsifier, second plasticizer and the like may be used. The emulsifier is preferable to be a poly(oxyethylene), nonylphenyl ether which can lower the initial viscosity by lowering the surface tension between resin and plasticizer and carry out a easy defoaming in the paste sol having a high viscosity. The second plasticizer is preferable to be an adipic acid glycolpolyester.

If necessary, the diluent and the pigment may be optionally added thereto.

The ceramic radiating the far infrared ray is an essential component in the antibacterial polyvinylchloride plastisol composition of the present invention.

On the other hand, it is well known that the far infrared ray has the growth inhibiting activity against microorganisms, but its mechanism has been unknown yet.

The wavelength of light is shorter, the stronger energy is obtained. Thus, the energy of the far infrared ray having a long wavelength is less than that of visible light. The action of light having a short wavelength and the strong energy such as cutting of hydrogen bonds, separation of electrons from an atom cannot be carried out in the cells, but the action may be absorbed in the water molecules. Although the energy of infrared ray is less than that of visible light, since the water occupies about 80~90 % of a cell, the infrared ray substantially improves the movement of water molecules and thus induces frequent collisions among the molecules when the infrared ray is absorbed in the water molecules occupying the greater part of the cell. Thus, the heat in the cell is increased due to frequent collisions among the molecules. The increased heat in the cell has a fatal effect upon the enzymes catalyzing various metabolisms in the cell.

In other words, the infrared ray radiating from the ceramics elevates the heat in the cell, and the enzymes which are unstable to the heat is denatured by an elevated heat in the cell. Thus, the metabolism is not catalyzed by the denatured enzymes. Consequently, the cells become to be died. In light of the above facts, it is presumed that a polyvinylchloride plastisol composition containing ceramic according to the present invention have an antibacterial effect.

The preferable composition of the ceramic used in the present invention is as follows :

| Components | Amounts |
|---|---|
| $SiO_2$ | 90 - 96% by wt. |
| $Al_2O_3$ | 1 - 3% by wt. |
| $Fe_2O_3$ | 0.6 - 1.4% by wt. |
| $K_2O+Na_2O$ | 2 - 4% by wt. |
| other oxides | 0.4 - 1.6% by wt. |

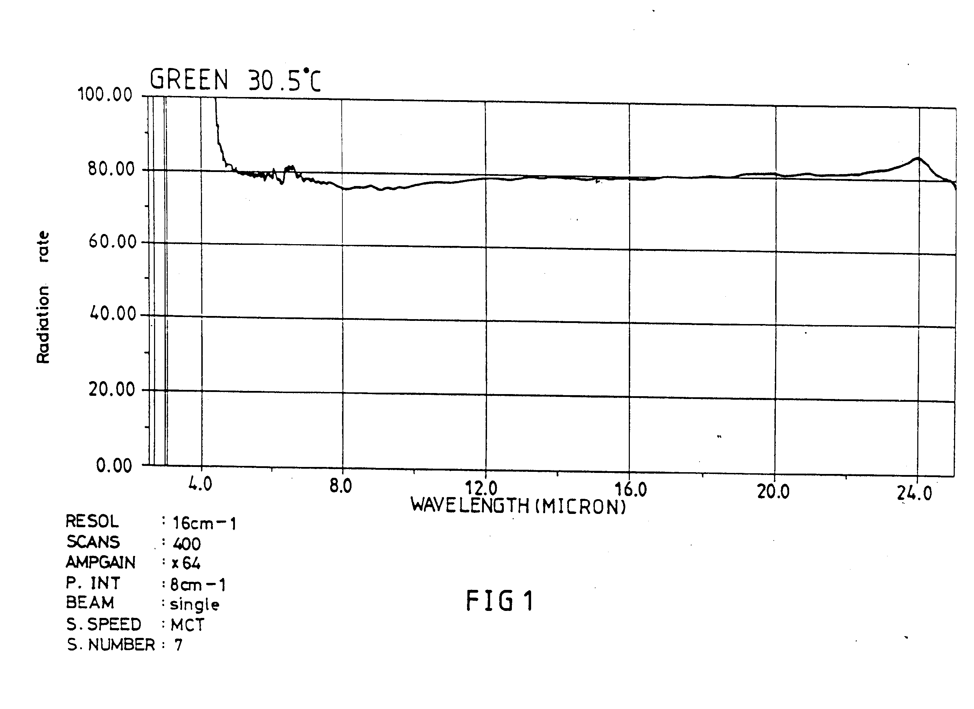

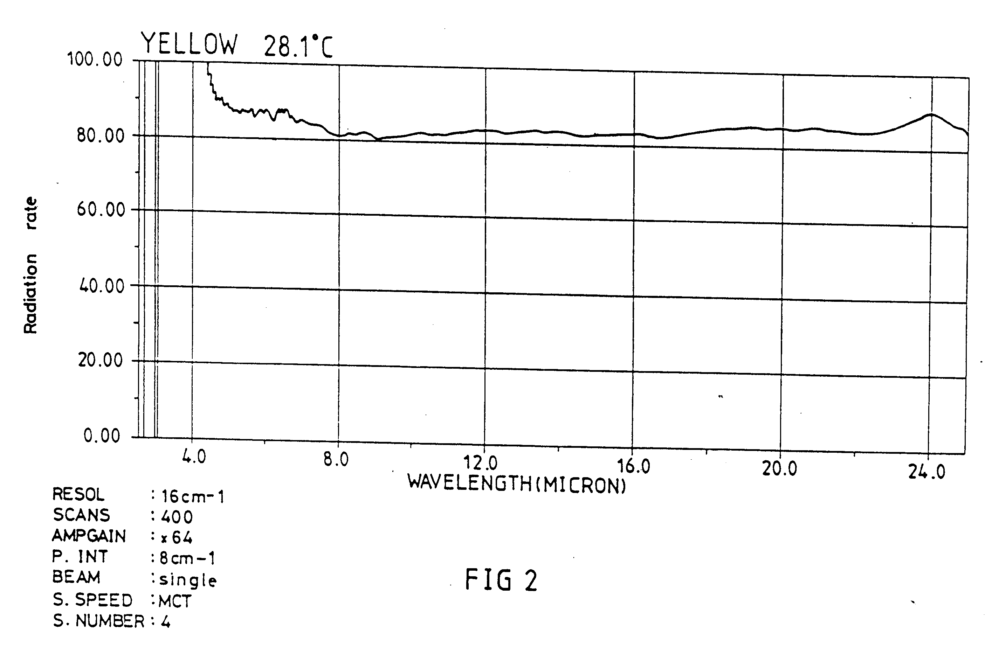

In order to determine the far infrared ray-radiating ability of the composition of the present invention, a sample containing 10 % by weight of ceramic(green sample) and a sample containing 20 % by weight of ceramic (yellow sample) are manufactured, respectively, and their far infrared ray-radiating ability was measured by furrier conversion infrared spectrophotometer(Nihon electronics Co., JOEL FT-IR Jir- 5500). When the far infrared ray radiating rate is determined in the range of 5 to 20 μm of the wavelength, the yellow sample showed 81 to 87 % of radiating rate, and the green sample did 76 to 82 % of radiating rate, respectively (referred to Figs. 1 and 2).

In general, the effect of far infrared ray is obtained at about 80 % of radiating rate. Therefore, it is proved that the present composition also shows the effect of far infrared ray.

In particular, the products of the present invention shows an excellent antibacterial activity of the far infrared ray, because the radiating rate is not lowered at 6 ~ 20 μm of the wavelength activating the water.

The invention will be more clearly illustrated with reference to the following Examples which are not to be construed to limit the scope of the invention.

In the following examples, the term "parts" means "parts by weight", and the term "%" means "% by weight based on the total amount of the composition". The strains used in the experiments are listed in Table 2. The "time" means the time required for culturing the strains, and the values shown in the figures are grades of growth of each strain with the lapse of time which was determined by absorbance at 450 nm.

Also, the growth multiples are the numerical value compared with the initial value after culturing the strains for 7 hours.

Example 1

60 parts by weight of diisononylphthalate as the first plasticizer, 0.4 parts by weight of calcium stearate, 0.3 parts by weight of zinc stearate and 1 part by weight of epoxy soybean oil as a stabilizer, 0.2 parts by weight of poly(oxyethylene),nonylphenyl ether as an emulsifier, and 11.5 parts by weight of adipic acid glycolpolyester as the second plasticizer are added to 100 parts by weight of polyvinylchloride paste resin. The resulting mixture is kneaded with the addition of ceramic in the amount of 5 % by weight based on the total amount of the composition, to obtain a polyvinylchloride plastisol composition.

The obtained composition was molded by the rotation and tested as follows. The results are shown in Table 2.

Antibacterial Activity Test

1. Strains

Staphylococcus aureus
Escherichia coli
Micrococcus luteus
Bacillus thuringiensis
Bacillus subtilis
Pseudomonos aeruginosa

2. Culture Medium

Nutrient broth(NB) : 1 % bactotryptone, 1 % NaCl and 0.5 % yeast extracts were well dissolved in distilled water and then the pH of the solution was adjusted to 7.5 with 0.2 N NaOH solution. The above solution was treated with a high pressure and then wetted. Then, the solution was sterilized to obtain the medium.

3. Cultivation

In order to find the log phase of each strain, the preliminary experiments was carried out to obtain the standard curve of growth for each strain.

The preliminary experiment was carried out as follows : 3 m$\ell$ of NB for each strain were prepared, and then a platinum loopful of each strain was inoculated. Thereafter, the strains were cultured with agitation at 37°C for 24 hours to obtain the first culture solution.

1 m$\ell$ of the first culture solution for each strain was inoculated in 10 m$\ell$ of NB, and the strains were cultured with agitation at 37 °C for 24 hours to obtain the second culture solution. Each 1 m$\ell$ of the second culture solution was inoculated in 100 m$\ell$ of NB, the absorbance was measured by using a spectrophotometer at 450 nm. The measured absorbance was defined as an initial value. Subsequently, the absorbance was measured at every time while it is cultured with agitation at 37 °C for 7 hours so that the standard curve of growth for each strain was obtained. The log phase of each strain was determined from the above standard curve of growth for each strain.

In this experiment, the first culture solution was obtained by the same method as the preliminary experiment. The second culture solution was prepared by culturing with agitation at 37 °C until each strain has reached its log phase, referring to the log phase of each strain obtained from the preliminary experiment. This second culture solution was used as an inoculating solution in the following antibacterial activity test.

4. Experimental Method

The experimental toys were produced with the polyvinylchloride plastisol composition containing 0 % and 5 % of ceramic, washed with 70 % alcohol, cut into a size of 5 mm x 2 mm with sterilized scissors, and then stored at -4 °C until they are used. Three nutrient broth(100 m$\ell$) per strain were prepared. The composition which only strains were cultured without addition of a toy sample is taken as a Control. The composition which 10 g of toy smple without addition of ceramic was added to the culture medium is taken as Comparative Example 1. The composition which 10 g of toy sample containing 5 % of ceramic was added to the culture medium is taken as Example 1. The strains were cultured by the conventional method. Each 1 m$\ell$ of the culture solution of each strain existing the log phase is taken, and then inoculated in each composition of Control, Comparative Example 1 and Example 1, respectively. The absorbance at 450 nm was measured by using a spectrophotometer. The measured absorbance was defined as an initial value. Subsequently, the absorbance was measured at every time while it is cultured, with agitation at 37°C for 7 hours.

Examples 2 to 6

The components except for ceramic were mixed with the blending ratio represented in Table 1, and 10%, 15%, 20%, 25% and 30% of ceramic in place of 5 % of ceramic in Example 1 were added thereto to obtain the compositions of examples 2 to 6. Antibacterial activity to each composition was determined in accordance with Example 1 and the results were shown in Table 2.

It is evident from Table 2 that a composition of the present invention has more remarkable antibacterial activity than that of comparative example.

Example 7

A sample containing 10 % by weight of ceramic(green sample) and a sample containing 20 % by weight of ceramic(yellow sample) were manufactured, respectively.

They were arranged with the black body as a standard material for 4 hours or more after the samples were attached to a measuring head in an incubator, and their far infrared ray-radiating ability was measured by Furrier conversion infrared spectrophotometer(Nihon electronics Co., JOEL FT-IR Jir- 5500).

A radiation rate of each sample was measured in a range of 5 ~ 20 μm at room temperature when they were at the same temperature.

The samples must be at the same temperature because the difference of the temperature between the samples hardly affected in case of a high temperature but in case of the room temperature, the variation was derived from a small difference of the temperature.

The results were shown in Figs 1 and 2.

# Table 1

| COMPONENTS | Example 1 | Example 2 | Example 3 | Example 4 | Example 5 | Example 6 | Comp.Exam.1 |
|---|---|---|---|---|---|---|---|
| Polyvinylchloride paste resin | 100 | 100 | 100 | 100 | 100 | 100 | 100 |
| Diisononylphthalate | 60 | 62 | 63 | 60 | 75 | 75 | 63 |
| Calcium stearate | 0.4 | 0.3 | 0.3 | 0.4 | 0.3 | 0.3 | 0.3 |
| Zinc stearate | 0.3 | 0.4 | 0.4 | 0.4 | 0.3 | 0.3 | 0.4 |
| Epoxy soybean oil | 1 | 1.5 | 2 | 1 | 2.1 | 2.1 | 2 |
| Poly(oxyethylene) nonylphenyl ether | 0.2 | 0.15 | 0.15 | 0.13 | 0.2 | 0.2 | 0.2 |
| Diluent(Deodorized spray base) | - | - | - | 1.5 | 2 | 2 | - |
| Adipic acid glycolpolyester | 11.5 | 11.8 | 12 | 12.2 | 11.5 | 11.5 | 12 |
| Total | 173.4 | 176.15 | 177.85 | 175.53 | 186.93 | 192.03 | 177.9 |
| Ceramic (%) | 5 | 10 | 15 | 20 | 25 | 30 | - |

## Table 2

※ m. growth : multiple growth

| Strains | Time | Example1 | Example2 | Example3 | Example4 | Example5 | Example6 | Control | Comp.Exam.1 |
|---|---|---|---|---|---|---|---|---|---|
| Staphylococcus aureus | 0 | 0.091 | 0.091 | 0.091 | 0.091 | 0.091 | 0.091 | 0.091 | 0.091 |
| | 1 | 0.106 | 0.179 | 0.176 | 0.146 | 0.143 | 0.14 | 0.156 | 0.174 |
| | 2 | 0.435 | 0.424 | 0.474 | 0.296 | 0.23 | 0.219 | 0.487 | 0.493 |
| | 3 | 0.793 | 0.692 | 0.827 | 0.434 | 0.293 | 0.277 | 0.89 | 0.853 |
| | 4 | 1.14 | 1.101 | 1.174 | 0.584 | 0.319 | 0.301 | 1.287 | 1.231 |
| | 5 | 1.278 | 1.209 | 1.28 | 0.619 | 0.277 | 0.355 | 1.417 | 1.368 |
| | 6 | 1.544 | 1.483 | 1.503 | 0.785 | 0.443 | 0.41 | 1.712 | 1.1604 |
| | 7 | 1.581 | 1.503 | 1.492 | 0.699 | 0.314 | 0.314 | 1.724 | 1.627 |
| m. growth | | 17.373 | 16.516 | 16.395 | 7.6813 | 3.4505 | 3.4505 | 18.845 | 17.8791 |
| Escherichia coli | 0 | 0.198 | 0.198 | 0.198 | 0.198 | 0.198 | 0.198 | 0.198 | 0.198 |
| | 1 | 0.555 | 0.545 | 0.546 | 0.539 | 0.478 | 0.473 | 0.516 | 0.535 |
| | 2 | 0.843 | 0.814 | 0.855 | 0.682 | 0.489 | 0.498 | 0.762 | 0.808 |
| | 3 | 1.123 | 0.81 | 0.911 | 0.725 | 0.417 | 0.42 | 1.365 | 1.046 |
| | 4 | 1.668 | 0.898 | 0.784 | 0.682 | 0.511 | 0.477 | 1.762 | 1.598 |
| | 5 | 2.33 | 1.07 | 0.571 | 0.605 | 0.71 | 2.529 | 2.24 | 2.14 |
| | 6 | 2.64 | 1.282 | 0.649 | 0.761 | 0.476 | 2.434 | 2.71 | 2.67 |
| | 7 | 2.87 | 1.101 | 0.705 | 0.472 | 0.329 | 2.316 | 2.88 | 2.84 |
| m. growth | | 14.494 | 5.5606 | 3.5606 | 2.3838 | 1.6616 | 1.5959 | 14.545 | 14.3434 |

EP 0 547 763 A1

## T a b l e   2   ( c o n t i n u e d )

| Strains | Time | Example1 | Example2 | Example3 | Example4 | Example5 | Example6 | Control | Comp.Exam.1 |
|---|---|---|---|---|---|---|---|---|---|
| Bacillus subtilis | 0 | 0.034 | 0.034 | 0.034 | 0.034 | 0.034 | 0.034 | 0.034 | 0.034 |
| | 1 | 0.098 | 0.062 | 0.08 | 0.14 | 0.112 | 0.075 | 0.097 | 0.134 |
| | 2 | 0.24 | 0.198 | 0.192 | 0.2 | 0.143 | 0.111 | 0.475 | 0.277 |
| | 3 | 0.631 | 0.377 | 0.235 | 0.385 | 0.169 | 0.149 | 0.525 | 0.609 |
| | 4 | 0.987 | 0.483 | 0.373 | 0.444 | 0.177 | 0.145 | 1.021 | 0.701 |
| | 5 | 1.101 | 0.747 | 0.418 | 0.377 | 0.191 | 0.153 | 1.175 | 0.861 |
| | 6 | 1.674 | 1.21 | 0.411 | 0.358 | 0.144 | 0.143 | 1.687 | 1.311 |
| | 7 | 1.987 | 1.547 | 0.397 | 0.341 | 0.101 | 0.100 | 2.31 | 1.783 |
| m. growth | | 58.441 | 45.5 | 11.676 | 10.029 | 2.9705 | 2.9411 | 67.941 | 52.4411 |
| Pseudomonos aeruginosa | 0 | 0.034 | 0.034 | 0.034 | 0.034 | 0.034 | 0.034 | 0.034 | 0.034 |
| | 1 | 0.095 | 0.062 | 0.044 | 0.049 | 0.039 | 0.041 | 0.102 | 0.091 |
| | 2 | 0.235 | 0.196 | 0.071 | 0.069 | 0.055 | 0.047 | 0.386 | 0.274 |
| | 3 | 0.482 | 0.397 | 0.121 | 0.134 | 0.125 | 0.124 | 0.511 | 0.502 |
| | 4 | 0.805 | 0.748 | 0.201 | 0.196 | 0.211 | 0.181 | 0.981 | 0.875 |
| | 5 | 1.034 | 0.941 | 0.234 | 0.264 | 0.208 | 0.224 | 1.311 | 1.154 |
| | 6 | 1.241 | 1.315 | 0.354 | 0.341 | 0.294 | 0.276 | 1.768 | 1.332 |
| | 7 | 1.587 | 1.525 | 0.365 | 0.312 | 0.187 | 0.167 | 2.315 | 1.542 |
| m. growth | | 46.676 | 44.852 | 10.735 | 9.1764 | 5.5 | 4.9117 | 68.088 | 45.3529 |

## Table 2 (continued)

| Strains | Time | Example1 | Example2 | Example3 | Example4 | Example5 | Example6 | Control | Comp.Exam.1 |
|---|---|---|---|---|---|---|---|---|---|
| Micrococcus luteus | 0 | 0.119 | 0.119 | 0.119 | 0.119 | 0.119 | 0.119 | 0.119 | 0.119 |
| | 1 | 0.33 | 0.328 | 0.322 | 0.304 | 0.276 | 0.298 | 0.308 | 0.323 |
| | 2 | 0.512 | 0.503 | 0.473 | 0.384 | 0.291 | 0.321 | 0.54 | 0.545 |
| | 3 | 0.943 | 0.754 | 0.56 | 0.442 | 0.238 | 0.235 | 0.985 | 0.935 |
| | 4 | 1.674 | 0.897 | 0.552 | 0.51 | 0.284 | 0.223 | 1.982 | 1.784 |
| | 5 | 2.26 | 0.944 | 0.373 | 0.615 | 0.31 | 0.298 | 2.24 | 2.1 |
| | 6 | 2.53 | 1.22 | 0.493 | 0.45 | 0.271 | 0.270 | 2.68 | 2.21 |
| | 7 | 2.71 | 1.106 | 0.54 | 0.246 | 0.14 | 0.134 | 2.84 | 2.55 |
| | m. growth | 22.773 | 9.2941 | 4.5378 | 2.0672 | 1.1764 | 1.1260 | 23.865 | 21.4285 |
| Bacillus thuringiensis | 0 | 0.097 | 0.097 | 0.097 | 0.097 | 0.097 | 0.097 | 0.097 | 0.097 |
| | 1 | 0.121 | 0.147 | 0.154 | 0.138 | 0.143 | 0.14 | 0.138 | 0.133 |
| | 2 | 0.482 | 0.511 | 0.495 | 0.375 | 0.191 | 0.197 | 0.507 | 0.475 |
| | 3 | 0.965 | 0.942 | 0.893 | 0.573 | 0.196 | 0.188 | 0.985 | 0.945 |
| | 4 | 1.244 | 0.235 | 1.21 | 0.488 | 0.166 | 0.18 | 1.316 | 1.231 |
| | 5 | 1.51 | 0.396 | 1.33 | 0.352 | 0.177 | 0.171 | 1.569 | 1.5 |
| | 6 | 1.57 | 1.678 | 1.544 | 0.261 | 0.195 | 0.169 | 1.612 | 1.508 |
| | 7 | 1.598 | 1.702 | 1.585 | 0.246 | 0.194 | 0.167 | 1.687 | 1.605 |
| | m. growth | 16.474 | 17.546 | 16.340 | 2.5360 | 2 | 1.7216 | 17.391 | 16.5463 |

## Claims

1. An antibacterial polyvinylchloride plastisol composition whcih is comprised of polyvinylchloride paste resin, diisononylphthalate, adipic acid glycolpolyester, calcium stearate, zinc stearate, epoxy soybean oil and additives, characterized in that ceramic as a far infrared ray radiating material is added to the composition.

9

2. The plastisol composition according to claim 1, wherein the amount of ceramic is more than 20 % by weight based on the total amount of the composition.

3. The plastisol composition according to claim 2, wherein the amount of ceramic is 20 to 30 % by weight based on the total amount of the composition.

4. The plastisol composition according to any one of claims 1 to 3, wherein the ceramic comprises 90-96% by weight of $SiO_2$, 1-3% by weight of $Al_2O_3$, 0.6-1.4% by weight of $Fe_2O_3$, 2-4% by weight of $K_2O+Na_2O$ and 0.4-1.6 % by weight of the other oxides.

EP 0 547 763 A1

FIG 1

11

YELLOW 28.1°C

Radiation rate

RESOL       : 16cm-1
SCANS       : 400
AMPGAIN     : × 64
P. INT      : 8cm-1
BEAM        : single
S. SPEED    : MCT
S. NUMBER   : 4

100.00
80.00
60.00
40.00
20.00
0.00

WAVELENGTH(MICRON)

4.0    8.0    12.0    16.0    20.0    24.0

FIG 2

EP 0 547 763 A1

## EUROPEAN SEARCH REPORT

European Patent Office

Application Number

EP 92 31 0373

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DATABASE WPIL<br>Week 9016,<br>Derwent Publications Ltd., London, GB;<br>AN 90-1205883<br>& JP-A-2 071 717 (EIWA KASEI) 12 March 1990<br>* abstract *<br>--- | 1-3 | C08K13/02<br>//(C08K13/02,<br>5:12,5:11,5:09,<br>5:09,5:15,3:34)<br>A61L9/18 |
| A | DATABASE WPIL<br>Week 2937,<br>Derwent Publications Ltd., London, GB;<br>AN 92-305684<br>& KR-B-9 101 759 (CHUNG H) 23 March 1991<br>* abstract *<br>--- | 1,4 | |
| A | DATABASE WPIL<br>Week 3090,<br>Derwent Publications Ltd., London, GB;<br>AN 90-229167<br>& JP-A-2 158 650 (TOSOH CORP) 19 June 1990<br>* abstract *<br>--- | 1,2 | |
| A | EP-A-0 088 416 (B F GOODRICH)<br>* page 3, line 33 - page 4, line 3 *<br>* example 4; table 1 *<br>----- | 1 | TECHNICAL FIELDS SEARCHED (Int. Cl.5 )<br><br>C08K<br>C09D |

The present search report has been drawn up for all claims

| Place of search | Date of completion of the search | Examiner |
|---|---|---|
| THE HAGUE | 24 MARCH 1993 | ENGEL S.L.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

13